# EUROPÄISCHE PATENTSCHRIFT

(11) **EP 2 780 264 B1**
(45) Veröffentlichungstag und Bekanntmachung des Hinweises auf die Patenterteilung: **03.02.2016**
(21) Anmeldenummer: 11810790.3
(22) Anmeldetag: 18.11.2011
(51) Int. Cl.: B65G 15/34

(54) **TRANSPORTBAND ODER ANTRIEBSBAND**
CONVEYOR BELT OR DRIVE BELT
BANDE TRANSPORTEUSE OU BANDE D'ENTRAÎNEMENT

(43) Veröffentlichungstag der Anmeldung: 24.09.2014
(73) Patentinhaber: FORBO SIEGLING GMBH, 30179 Hannover (DE)
(72) Erfinder: FLEISSNER, Ulrike, 30165 Hannover (DE); BUCH, Torsten, 30900 Wedemark (DE); HAYDUK, Claudius, 30627 Hannover (DE); MEYER, Peter, 30449 Hannover (DE)
(74) Vertreter: Scheffler, Jörg
(86) Internationale Anmeldenummer: PCT/DE2011/075279
(87) Internationale Veröffentlichungsnummer: WO 2013/071900

(56) Entgegenhaltungen:
- EP-A- 0 309 605
- WO-A1-02/062682
- WO-A1-02/081945
- US-A- 3 205 119
- US-A1- 2009 014 084
- US-A1- 2009 233 746

## Beschreibung

Die Erfindung betrifft ein als ein Transportband oder Antriebsband ausgeführtes Band mit zumindest einem Zugträger, wobei zumindest ein Zugträger an seiner Außenseite mit einer Beschichtung, insbesondere einer Funktionsbeschichtung, versehen ist, wobei das Material des Zugträgers aus einem nachwachsenden Rohstoff und/oder einem biologisch abbaubaren Rohstoff besteht.

Derartige Transportbänder sind zur Beförderung von Gegenständen in einer Vielzahl von Bereichen bekannt. Je nach Art der zu transportierenden Gegenstände, wie beispielsweise Gepäck, Lebensmittel oder Schüttgüter, müssen diese Förderbänder unterschiedlichen Anforderungen genügen. In Längsrichtung wird wegen der im Allgemeinen recht langen Förderstrecken eine geringe Dehnbarkeit zusammen mit einer Biegbarkeit für eine Führung entlang einer Antriebs- und Umlenktrommel gefordert. Die als Zug- und Festigkeitsträger wirkenden textilen Einlagen bestimmen dabei im Wesentlichen die Eigenschaften eines Transportbands hinsichtlich Zugfestigkeit, Dehnbarkeit und Quersteifigkeit. Die gewünschte Festigkeit bei hoher Lebensdauer wird beispielsweise durch die Verwendung mehrschichtig eingelegter Flachgewebe erreicht.

Durch die Anordnung von zwei oder mehr Lagen eines Trägergewebes kann die Längs- und Querstabilität weiter erhöht werden.

Die US 2009/0014084 A1 beschreibt ein gattungsgemäßes als Transportband ausgeführtes Band mit einem eine Beschichtung aufweisenden Zugträger, wobei das Material des Zugträgers aus einem nachwachsenden Rohstoff besteht. Als Material für Kettfäden und Schussfäden können dabei Naturfasern, beispielsweise Cellulose oder Wolle, verwendet werden.

Die WO 97/46470 A1 beschreibt ein Transportband für Lebensmittel, insbesondere zur Verwendung in Maschinen zur Aufbereitung von Lebensmitteln, wie sie beispielsweise bei Bäckereimaschinen im Einsatz sind. Die Transportbänder aus Baumwollgeweben oder Baumwollfilzen werden dazu verwendet, Teigteile aus Formen aufzunehmen und an Übergabestellen abzugeben.

Um die bekannte nachteilige große Dehnung des Baumwollmaterials bereits nach wenigen Stunden oder Tagen der Inbetriebnahme zu überwinden, welche zur Unbrauchbarkeit des Bands führen kann, ist der Nadelvliesstoff mit einer Imprägnierung durch ein Bindercompound einer Kunststoffdispersion ausgerüstet. Hierdurch wird bei weiterhin erhaltener Elastizität eine hohe innere Festigkeit des Transportbands erreicht, welche geringe Dehnungen des Materials bei langen Standzeiten gewährleistet. Dies kann noch durch das Einbringen eines Zugträgers in Form eines Gewebes unterstützt werden.

Die EP 0 380 971 B1 betrifft ein Transportband bestehend aus einer gewebeverstärkten Kunststoffbahn mit sich in Längsrichtung erstreckenden textilen Verstärkungseinlagen aus sich kreuzenden Kett- und Schussfäden. Um eine gute Gesamtfestigkeit zu erreichen, wird eine Verstärkungseinlage, gebildet von einem Festigkeitsträger in Form eines Doppelpolgewebes, verwendet. Hierzu eignen sich Polyesterfasern aufgrund der geringen Dehnung. Des Weiteren sind auch Mischfasern, beispielsweise aus Polyester und Baumwolle oder Polyamid und Zellwolle, einsetzbar.

Der Erfindung liegt die Aufgabe zugrunde, eine Möglichkeit zu schaffen, die mit der Herstellung und dem Gebrauch verbundene Umweltbelastung wesentlich zu reduzieren.

Diese Aufgabe wird erfindungsgemäß mit einem Band gemäß den Merkmalen des Anspruchs 1 gelöst. Die weitere Ausgestaltung der Erfindung ist den Unteransprüchen zu entnehmen.

Erfindungsgemäß besteht also das Material der Beschichtung aus einem nachwachsenden und biologisch abbaubaren Rohstoff. In überraschender Weise werden durch diese erfindungsgemäße Kombination des Zugträger- und des Beschichtungsmaterials die gewünschten Eigenschaften synthetischer Bänder erreicht, die weder biologischen Ursprungs noch biologisch abbaubar sind, wie beispielsweise Polyester, Polyamid oder Aramid. Der Erfindung zugrunde liegt die überraschende Erkenntnis, dass die für den sicheren und dauerhaften Betrieb erforderliche Dehnungsarmut durch die Kombination des Zugträgermaterials in Verbindung mit einem aus einem biologisch abbaubaren Rohstoff bestehenden Material für die Beschichtung erreicht wird. Entgegen dem Vorurteil in der Fachwelt eignet sich eine solche Materialkombination, die bisher allenfalls für statische Einsatzzwecke in Erwägung gezogen wurde, auch für dynamische Einsatzbedingungen, wie sie bei Antriebs- und Transportbändern durch Biegewechselbeanspruchung und zyklische Dehnung auftreten. Zugleich wird im Betrieb des Bands durch den reduzierten Gleitreibwert der Energieverbrauch vermindert. Eine Verkürzung des Lebenszyklus des erfindungsgemäßen Bands ist nicht zu befürchten. Vielmehr lassen bisherige Versuche bereits auf eine gesteigerte Lebensdauer im Vergleich zu den nach dem Stand der Technik bekannten Antriebs- und Transportbändern schließen.

Dabei erweist es sich als besonders vorteilhaft, wenn der Zugträger aus Zellulosefasern oder Polylactiden besteht, die hierzu entweder sortenrein oder auch in Kombination miteinander Verwendung finden. Dabei lassen sich insbesondere auch Gewebebindungen realisieren, die aufgrund ihres konstruktiven Aufbaus der erwarteten hohen Dehnung entgegenwirken. Beispielsweise zeichnen sich Polylactide durch ihre gute thermische Verformbarkeit aus, die eine optimale Bindung des Zugträgermaterials gestattet. Derartige Polylactid-Materialien sind biokompatibel und biologisch abbaubar und können aus einem nachwachsenden Rohstoff gewonnen werden.

Vorzugsweise wird eine dehnungsarme Gewebeausführung durch Zugträgerkettfäden mit niedriger Einarbeitung, also durch einen Hoch-Tief-Wechsel der Kettfäden, oder durch völlig gerade liegende Zugträgerkettfäden realisiert. Beispielsweise kann eine solche Gewebeausführung durch eine Vielzahl von nebeneinander angeordneten Paaren von Schussfäden realisiert werden, die eine obere Schicht von Schussfäden und eine untere Schicht von Schussfäden bilden, und mit einer Vielzahl von Kettfäden, wobei sich jeder Kettfaden über mindestens eines der Paare von Schussfäden in der oberen Schicht und unter mindestens zwei Paaren von Schussfäden in der unteren Schicht erstreckt, die angrenzend an mindestens das eine der Paare von Schussfäden angeordnet sind.

Außerdem kann die Gewebeausführung aus kreuzenden Kett- und Schussfäden mit mindestens einer Gewebelage bestehen, bei denen die Polfäden mittels einer V-Bindung oder Poldurchbindung das Ober- und Untergewebe verbinden.

Eine besonders vorteilhafte Ausgestaltung der vorliegenden Erfindung wird auch dadurch realisiert, dass das Band mehrere, jeweils durch eine Zwischenschicht verbundene Zugträger aufweist, um so die Belastbarkeit des Zugträgers weiter zu verbessern, ohne die gewünschten flexiblen Eigenschaften wesentlich einzuschränken. Selbstverständlich kann die Zwischenschicht in die Gewebestruktur des Zugträgers eingreifen, um so der Dehnung des Zugträgers entgegenzuwirken.

Weiterhin hat es sich auch bereits als sinnvoll erwiesen, wenn die Beschichtung als einen wesentlichen Materialanteil ein Polylactid aufweist, welches biologisch abbaubar ist.

Die Beschichtung könnte direkt auf den Zugträger aufgebracht werden. Besonders praxisgerecht ist es hingegen, wenn die Beschichtung mittels einer Adhäsionsschicht mit dem Zugträger verbunden ist, um so gegebenenfalls zu Recyclingzwecken eine spätere Trennung des Zugträgers von seiner jeweiligen Beschichtung realisieren zu können. Beispielsweise können hierzu Adhäsionsschichten eingesetzt werden, die unter einer bestimmten äußeren Einwirkung ihre Adhäsionskraft nahezu vollständig verlieren.

Weiterhin erweist es sich als besonders vielversprechend, wenn der Zugträger an seiner der Beschichtung abgewandten Oberfläche mit einer reibungsmindernden Schicht oder Imprägnierung ausgestattet ist, die beispielsweise als einen wesentlichen Bestandteil ein natürliches Wachs aufweist. Hierdurch wird der im Betrieb des Bands auftretende Energieverbrauch deutlich vermindert und somit die Umweltverträglichkeit weiter verbessert. Da die Faserstruktur der biobasierenden Gewebe viel Raum bietet für eine Speicherung des reibungsmindernden Materials, wird auch die Langzeitwirkung dieser Beschichtung positiv beeinflusst.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung in
- Fig. 1: ein erfindungsgemäßes Band in einer perspektivischen, teilweise geschnittenen Darstellung;
- Fig. 2: einen Zugträger mit in einer Ebene angeordneten Zugträgerfäden und in zwei Ebenen angeordneten Schussfäden;
- Fig. 3: einen weiteren Zugträger mit in einer Ebene angeordneten Zugträgerfäden und in zwei Ebenen angeordneten Schussfäden;
- Fig. 4: einen Zugträger mit in zwei Ebenen angeordneten Zugträgerfäden und in drei Ebenen angeordneten Schussfäden.

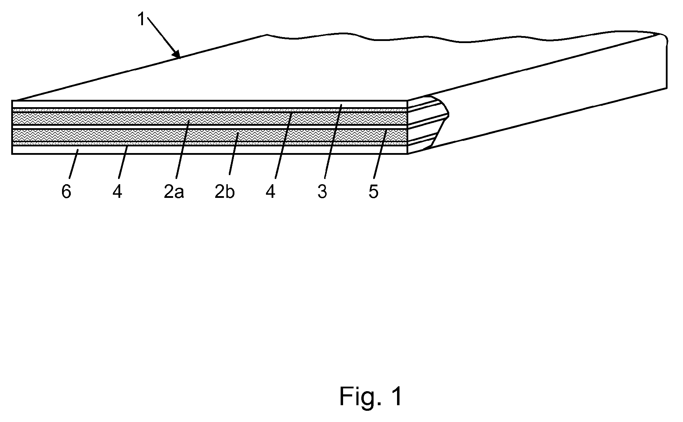

Figur 1 zeigt in einer Prinzipdarstellung ein erfindungsgemäßes Band 1 mit zwei Zugträgern 2a, 2b aus einem nachwachsenden Rohstoff, wobei der obere Zugträger 2a an seiner Außenseite mit einer Beschichtung 3 versehen ist. Diese Beschichtung 3 besteht im Wesentlichen aus einem nachwachsenden und biologisch abbaubaren Rohstoff und ist mittels einer Adhäsionsschicht 4 mit dem Zugträger 2a verbunden. Durch eine Zwischenschicht 5 sind die Zugträger 2a, 2b untereinander verbunden. Auf seiner dem oberen Zugträger 2a und seiner Beschichtung 3 abgewandten Seite ist der untere Zugträger 2b an seiner Oberfläche mit einer reibungsmindernden Schicht 6 aus einem natürlichen Wachs ausgestattet. Sowohl die Adhäsionsschicht 4 als auch die Zwischenschicht 5 können lösbar ausgeführt sein, um so nach dem Ende der Gebrauchsfähigkeit eine sortenreine Trennung der Materialien zu ermöglichen.

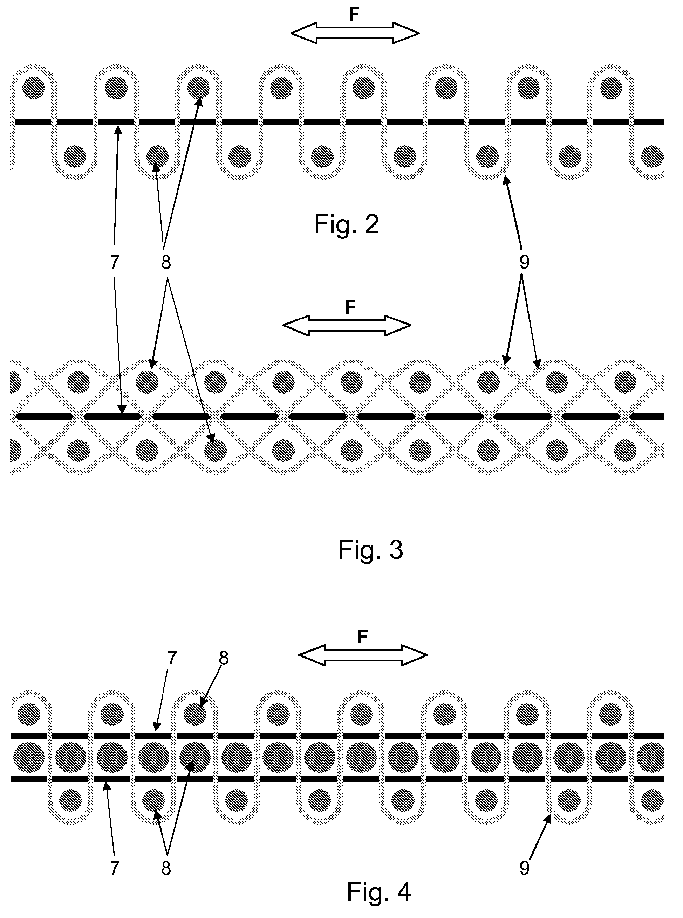

In den Figuren 2 und 3 ist jeweils ein Zugträger dargestellt, dessen Zugträgerfäden 7 sich in einer einzigen Fadenebene in Förderrichtung F des in Figur 1 gezeigten Bands 1 erstrecken, während die Schussfäden 8 oberhalb und unterhalb der Ebene der Zugträgerfäden 7 in jeweils einer Ebene verlaufen. Im Unterschied zu Figur 2 verlaufen bei dem in Figur 3 gezeigten Zugträger die Bindekettfäden 9 zueinander kreuzend.

Demgegenüber zeigt Figur 4 einen Zugträger mit in zwei Ebenen angeordneten Zugträgerfäden 7 und in drei Ebenen angeordneten Schussfäden 8. Die Bindekettfäden 9 schließen dabei sowohl die Ebenen der Zugträgerfäden 7 als auch die Ebenen der Schussfäden 8 ein.

## Patentansprüche

1. Ein als ein Transportband oder Antriebsband ausgeführtes Band (1) mit zumindest einem Zugträger (2a, 2b), wobei zumindest ein Zugträger (2a) an einer Außenseite mit einer Beschichtung (3), insbesondere einer Funktionsbeschichtung versehen ist, wobei das Material des Zugträgers (2a, 2b) aus einem nachwachsenden Rohstoff und/oder einem biologisch abbaubaren Rohstoff besteht, **dadurch gekennzeichnet, dass** das Material der Beschichtung (3) im Wesentlichen aus einem nachwachsenden und biologisch abbaubaren Rohstoff besteht.

2. Band (1) nach Anspruch 1, **dadurch gekennzeichnet, dass** der Zugträger (2a, 2b) aus Zellulosefasern und/oder -lignin und/oder Polylactiden besteht.

3. Band (1) nach den Ansprüchen 1 oder 2, **dadurch gekennzeichnet, dass** das Band (1) mehrere, jeweils durch eine Zwischenschicht (5) verbundene Zugträger (2a, 2b) aufweist.

4. Band (1) nach zumindest einem der vorhergehenden Ansprüche, **dadurch gekennzeichnet, dass** die Beschichtung (3) als einen wesentlichen Materialanteil ein Polylactid aufweist.

5. Band (1) nach zumindest einem der vorhergehenden Ansprüche, **dadurch gekennzeichnet, dass** die Beschichtung (3) mittels einer Adhäsionsschicht (4) mit dem Zugträger (2a) verbunden ist.

6. Band (1) nach zumindest einem der vorhergehenden Ansprüche, **dadurch gekennzeichnet, dass** der Zugträger (2b) an seiner der Beschichtung (3) abgewandten Oberfläche mit einer reibungsmindernden Schicht (6) ausgestattet ist.

7. Band (1) nach Anspruch 6, **dadurch gekennzeichnet, dass** die reibungsmindernde Schicht (6) als einen wesentlichen Bestandteil ein natürliches und biologisch abbaubares Wachs aufweist.

8. Band (1) nach zumindest einem der vorhergehenden Ansprüche, **dadurch gekennzeichnet, dass** mehrere Zugträger (2a, 2b) durch eine Zwischenschicht (5) miteinander verbunden sind.

9. Band (1) nach zumindest einem der vorhergehenden Ansprüche, **dadurch gekennzeichnet, dass** das Material des Zugträgers (2a, 2b) und/oder das Material der Beschichtung (3) stärkebasierende Rohstoffe, insbesondere PLA, PES, und/oder Zellulose und/oder zuckerbasierende Rohstoffe, insbesondere PE, PBS, und/oder Polyamid oder Gemische hiervon enthält

10. Band (1) nach zumindest einem der vorhergehenden Ansprüche, **dadurch gekennzeichnet, dass** zumindest ein Zugträger (2a, 2b) zumindest eine Fadenebene mit gestreckten Zugträgerfäden (7) aus Multifilen, Stapelfasern und/oder Monofilen aufweist.

11. Band (1) nach Anspruch 10, **dadurch gekennzeichnet, dass** sich zumindest eine Fadenebene in Richtung der Haupterstreckung des Bands (1) erstreckt.

12. Band (1) nach Anspruch 10, **dadurch gekennzeichnet, dass** sich zumindest eine Fadenebene quer zu der Haupterstreckung des Bands (1) erstreckt.

13. Band (1) nach zumindest einem der vorhergehenden Ansprüche, **dadurch gekennzeichnet, dass** die Zugträgerfäden (7) zumindest einer Fadenebene durch Bindekettfäden (9) mit einem hohen Crimp verbunden sind.

14. Band (1) nach zumindest einem der Ansprüche 10 bis 13, **dadurch gekennzeichnet, dass** die Zugträgerfäden (7) und/oder die Bindekettfäden (9) aus nachwachsenden und/oder biologisch abbaubaren Rohstoffen bestehen.

## Claims

1. Transporting or drive belt (1) having at least one traction member (2a, 2b), wherein at least one traction member (2a) has a coating (3), in particular a functional coating, on an outer side, wherein the material of the traction member (2a, 2b) consists of a renewable raw material and/or a biodegradable raw material, **characterized in that** the material of the coating (3) consists essentially of a renewable and biodegradable raw material.

2. Belt (1) according to Claim 1, **characterized in that** the traction member (2a, 2b) consists of cellulose fibres and/or cellulose lignin and/or polylactides.

3. Belt (1) according to Claims 1 or 2, **characterized in that** the belt (1) includes a plurality of traction members (2a, 2b) each connected by an intermediate layer (5).

4. Belt (1) according to at least one of the preceding claims, **characterized in that** the coating (3) includes a polylactide as an essential proportion of its material.

5. Belt (1) according to at least one of the preceding claims, **characterized in that** an adhesive layer (4) connects the coating (3) to the traction member (2a).

6. Belt (1) according to at least one of the preceding claims, **characterized in that** the traction member (2b) has a friction-reducing layer (6) on its surface remote from the coating (3).

7. Belt (1) according to Claim 6, **characterized in that** the friction-reducing layer (6) includes a natural and biodegradable wax as an essential constituent.

8. Belt (1) according to at least one of the preceding claims, **characterized in that** one intermediate layer (5) interconnects a plurality of traction members (2a, 2b).

9. Belt (1) according to at least one of the preceding claims, **characterized in that** the material of the traction member (2a, 2b) and/or the material of the coating (3) contains starch-based raw materials, in particular PLA, PES, and/or cellulose and/or sugar-based raw materials, in particular PE, PBS, and/or polyamide or mixtures thereof.

10. Belt (1) according to at least one of the preceding claims, **characterized in that** at least one traction member (2a, 2b) includes at least one thread plane with stretched traction member threads (7) comprising multifilaments, staple fibres and/or monofilaments.

11. Belt (1) according to Claim 10, **characterized in that** at least one thread plane extends in the direction of the main extent of the belt (1).

12. Belt (1) according to Claim 10, **characterised in that** at least one thread plane extends transversely to the main extent of the belt (1).

13. Belt (1) according to at least one of the preceding claims, **characterized in that** the traction member threads (7) of at least one thread plane are connected by binding warp threads (9) with a high crimp.

14. Belt (1) according to at least one of Claims 10 to 13, **characterized in that** the traction member threads (7) and/or the binding warp threads (9) consist of renewable and/or biodegradable raw materials.

## Revendications

1. Bande (1) configurée en tant que bande transporteuse ou bande d'entraînement avec au moins un tirant (2a, 2b), dans laquelle au moins un tirant (2a) est muni d'un revêtement (3) sur un côté extérieur, en particulier d'un revêtement fonctionnel, dans laquelle le matériau du tirant (2a, 2b) se compose d'une matière première à post-croissance et/ou d'une matière première biologiquement dégradable, **caractérisée en ce que** le matériau du revêtement (3) se compose essentiellement d'une matière première à post-croissance et d'une matière première biologiquement dégradable.

2. Bande (1) selon la revendication 1, **caractérisée en ce que** le tirant (2a, 2b) se compose de fibres et/ou de lignine de cellulose et/ou de polylactides.

3. Bande (1) selon une des revendications 1 ou 2, **caractérisée en ce que** la bande (1) présente plusieurs tirants (2a, 2b), reliés respectivement par une couche intermédiaire (5).

4. Bande (1) selon au moins une des revendications précédentes, **caractérisée en ce que** le revêtement (3) présente un polylactide comme fraction de matière essentielle.

5. Bande (1) selon au moins une des revendications précédentes, **caractérisée en ce que** le revêtement (3) est assemblé au tirant (2a) au moyen d'une couche d'adhésif (4).

6. Bande (1) selon au moins une des revendications précédentes, **caractérisée en ce que** le tirant (2b) est doté d'une couche réduisant le frottement (6) sur sa surface opposée au revêtement (3).

7. Bande (1) selon la revendication 6, **caractérisée en ce que** la couche réduisant le frottement (6) présente comme un composant essentiel une cire naturelle et biologiquement dégradable.

8. Bande (1) selon au moins une des revendications précédentes, **caractérisée en ce que** plusieurs tirants (2a, 2b) sont assemblés l'un à l'autre par une couche intermédiaire (5).

9. Bande (1) selon au moins une des revendication précédentes, **caractérisée en ce que** le matériau du tirant (2a, 2b) et/ou le matériau du revêtement (3) contient des matières premières à base d'amidon, en particulier PLA, PES, et/ou de la cellulose et/ou des matières premières à base de sucre, en particulier PE, PBS, et/ou du polyamide ou des mélanges de ceux-ci.

10. Bande (1) selon au moins une des revendications précédentes, **caractérisée en ce qu'**au moins un tirant (2a, 2b) présente au moins un plan de fils avec des fils de tirant étirés (7) en fils multi-filaments, en fibres discontinues et/ou en mono-filaments.

11. Bande (1) selon la revendication 10, **caractérisée en ce qu'**au moins un plan de fils s'étend dans la direction de l'extension principale de la bande (1).

12. Bande (1) selon la revendication 10, **caractérisée en ce qu'**au moins un plan de fils s'étend transversalement à l'extension principale de à bande (1).

13. Bande (1) selon au moins une des revendications précédentes, **caractérisée en ce que** les fils de tirants (7) d'au moins un plan de fils sont reliés par des fils de chaîne de liage (9) avec une forte frisure.

14. Bande (1) selon au moins une des revendications 10 à 13, **caractérisée en ce que** les fils de tirants (7) et/ou les fils de chaîne de liage (9) se composent de matières premières à post-croissance et/ou de matières premières biologiquement dégradables.
